# EUROPÄISCHE PATENTSCHRIFT

(11) **EP 2 207 978 B1**
(45) Veröffentlichungstag und Bekanntmachung des Hinweises auf die Patenterteilung: **29.05.2013**
(21) Anmeldenummer: 08801246.3
(22) Anmeldetag: 28.08.2008
(51) Int. Cl.: F16D 13/58, F16D 13/75

(54) **REIBUNGSKUPPLUNG**
FRICTION CLUTCH
EMBRAYAGE À FRICTION

(30) Priorität: 24.09.2007 DE 102007045584
(43) Veröffentlichungstag der Anmeldung: 21.07.2010
(73) Patentinhaber: Schaeffler Technologies AG & Co. KG, 91074 Herzogenaurach (DE)
(72) Erfinder: SIMON, Yannick, 67630 Lauterbourg (FR); RABER, Christoph, 66564 Ottweiler-Steinbach (DE)
(86) Internationale Anmeldenummer: PCT/DE2008/001439
(87) Internationale Veröffentlichungsnummer: WO 2009/039813

(56) Entgegenhaltungen:
- EP-A- 1 710 461
- DE-A1- 4 418 026
- FR-A- 2 764 015
- GB-A- 2 120 329
- GB-A- 2 305 698
- US-A- 5 715 921

## Beschreibung

Die vorliegenden Erfindung entspricht eine Reibungskupplung gemäß dem Oberbegriff des Patentanspruchs 1.

Die Erfindung bezieht sich ganz allgemein auf Reibungskupplungen, insbesondere solche, bei denen eine den Verschleiß zumindest der Reibbeläge der Kupplung kompensierende Nachstelleinrichtung vorhanden ist, insbesondere solche, wie sie zum Beispiel in den Patentanmeldungen DE 42 39 291 A1, DE 43 06 505 A1, DE 42 39 289 A1, DE 43 22 677 A1, DE 44 18 026 A1, DE 44 31 641 A1 und DE 195 10 905 A1 beschrieben oder erwähnt sind. Derartige Reibungskupplungen sind unter anderem zur Verwendung im Antriebsstrang eines Kraftfahrzeuges gedacht, und besitzen in den weitaus meisten Fällen eine gegenüber einem Gehäuse drehfeste, jedoch axial begrenzt verlagerbare Anpressplatte, wobei zwischen Gehäuse und Anpressplatte wenigstens eine Tellerfeder vorgesehen ist, welche die Anpressplatte in axialer Richtung vom Gehäuse weg beaufschlagt. Die in der Reibungskupplung vorgesehene Nachstelleinrichtung gewährleistet einen zumindest annähernd konstanten Verspannungszustand der Tellerfeder und somit auch eine annähernd gleiche Anpresskraft über die Lebensdauer der im Antriebsstrang montierten Reibungskupplung.

Eine Reibungskupplung gemäß dem Oberbegriff des Patentanspruchs 1 iat aus der DE 44 18 026 A1 bekannt.

Der vorliegenden Erfindung lag die Aufgabe zugrunde, Reibungskupplungen der eingangs genannten Art zu schaffen, deren Herstellung selbst als auch die Herstellung deren Komponenten einfach und preiswert erfolgen kann, wobei diese Komponenten auch möglichst einfach dimensionierbar sein sollen, um eine optimale Funktion der Reibungskupplung zu gewährleisten. Eine weitere Aufgabe besteht darin, Reibungskupplungen zu schaffen, die über den Ausrückweg der Tellerfederzungen und unter Berücksichtigung der möglichen Herstellungstoleranzen beziehungsweise Streuungen, sowie über die Lebensdauer bzw. über den Verschleiß der Reibungskupplung einen möglichst niedrigen und/oder möglichst konstanten Ausrückkraftverlauf zumindest nach Freigabe der Kupplungsscheibe- aufweisen. Es soll auch über den maximal möglichen Ausrückweg und über die Lebensdauer der Kupplung ein unzulässiger beziehungsweise unerwünschter Kraftanstieg, der die Funktion der Nachstelleinrichtung beeinträchtigen könnte, vermieden werden.

Erfingdungsgemäß gelöst wird diese Aufgabe durch eine Reibungskupplung mit den Merkmalen des Patentanspruchs 1.

Bevorzugte Ausführungsbeispiele der vorliegenden Erfindung sind in den abhängigen Patentansprüchen dargelegt.

Über die Lebensdauer der Reibungskupplung können wenigstens die Anpressplatte und die Tellerfeder eine axiale Verlagerung gegenüber dem Gehäuse zumindest aufgrund des Reibbelagverschleißes erfahren, wodurch sich der Verspannungszustand der blattfederartigen Mittel der Sensorfeder und der Zusatzfedermittel verändert. Die Nachstelleinrichtung bewirkt auch, dass die Abstützauflage der Tellerfeder in Abhängigkeit des auftretenden Reibbelagverschleißes axial verlagert wird.

In vorteilhafter Weise kann die Einleitung der von der Sensorfeder auf die Tellerfeder axial ausgeübten Abstützkraft, zumindest annähernd auf radialer Höhe der Abstützung zwischen Tellerfeder und Anpressplatte, erfolgen. Für manche Anwendungsfälle kann es jedoch auch vorteilhaft sein, wenn diese Einleitungsstelle auf einem anderen Durchmesserbereich der Tellerfeder erfolgt, z. B. zumindest annähernd auf radialer Höhe der Abstützauflage, oder aber radial außerhalb oder radial innerhalb dieser Abstützauflage. Bei einer Krafteinleitung auf Höhe der Abstützauflage wird kein Drehmoment durch die Sensorfeder in die Tellerfeder eingeleitet. Bei einer Krafteinleitung radial außerhalb der Abstützauflage, wird in die Tellerfeder von der Sensorfeder ein Drehmoment bzw. eine Kraft eingeleitet, welche der Tellerfeder entgegen wirkt. Bei einer Abstützung der Sensorfeder radial innerhalb der Abstützauflage wird in die Tellerfeder ein Drehmoment bzw. eine Kraft eingeleitet, wodurch eine Unterstützung der Tellerfeder in Schließrichtung der Reibungskupplung erfolgt.

Weiterhin kann es zweckmäßig sein, wenn die Einleitung der von dem Zusatzfedermittel auf die Tellerfeder ausgeübte Axialkraft radial innerhalb der Abstützauflage erfolgt. Die Krafteinleitung des Zusatzfedermittels kann jedoch auch auf einem anderen Durchmesserbereich der Tellerfeder erfolgen und zwar in ähnlicher Weise, wie die im Zusammenhang mit der Sensorfeder erläutert wurde. Besonders vorteilhaft kann es jedoch sein, wenn die Einleitung der von der Sensorfeder und den Zusatzfedermittel auf die Tellerfeder axial ausgeübten Abstützkräfte in Bezug auf die ringartige Abstützauflage auf unterschiedlichen radialen Seiten erfolgt. So kann beispielsweise die Krafteinleitung durch die Sensorfeder radial außerhalb der Abstützauflage erfolgen und die Krafteinleitung durch das Zusatzfedermittel radial innerhalb dieser Abstützauflage stattfinden. Durch eine derartige Anordnung ist zumindest ein gewisser Ausgleich der durch die Sensorfeder und das Zusatzfedermittel in die Tellerfeder eingeleiteten Drehmomente bezogen auf die Abstützauflage, möglich.

Das Zusatzfedermittel kann in vorteilhafter Weise durch ein vorzugsweise aus Stahl hergestelltes Bauteil gebildet sein, das einen ringförmigen Bereich besitzt, von dem radial verlaufende, Federeigenschaften aufweisende Arme ausgehen, welche die Tellerfeder axial beaufschlagen. Vorzugsweise sind die Arme in Bezug auf den ringförmigen Bereich radial nach außen gerichtet. Der ringförmige Bereich kann mittelbar oder unmittelbar am Kupplungsgehäuse axial abgestützt sein. Die Abstützung des ringförmigen Bereiches kann in einfacher Weise mittels Zusatzarme erfolgen, welche ebenfalls vom ringförmigen Bereich ausgehen und zur Abstützung des Zusatzfedermittels am Gehäuse dienen. Falls erforderlich können die Zusatzarme ebenfalls eine gewisse Federung bzw. Federeigenschaft aufweisen.

In vorteilhafter Weise können der ringförmige Bereich, die federnde Arme und die Zusatzarme einstückig ausgebildet sein.

Die Abstützung des Zusatzfedermittels gegenüber dem Gehäuse kann in einfacher Weise über eine Bajonettverriegelung erfolgen, wobei zur Bildung dieser Bajonettverriegelung die Zusatzarme entsprechend ausgebildete Bereiche besitzen können. Durch axiales Aufstecken des Zusatzfedermittels und Verdrehen desselben gegenüber dem Gehäuse, kann die Bajonettverriegelung bzw. Bajonettverbindung hergestellt werden. Die Zusatzarme können mittels am Gehäuse vorgesehenen Abstützbereichen axial abgestützt werden. Die Zusatzarme des Zusatzfedermittels können axial ausgerichtet sein und an entsprechend angepasste Bereiche des Kupplungsgehäuses angehängt werden.

Die Zusatzarme des Zusatzfedermittels können jedoch in ähnlicher Weise wie federnde Arme ausgebildet bzw. ausgerichtet sein. So können solche Zusatzarme sich ebenfalls von einem ringförmigen, geschlossenen Bereich radial nach außen erstrecken und an vom Gehäuse getragenen Abstützbereichen mit Vorspannung axial abstützen. Bei einer derartigen Ausgestaltung kann es vorteilhaft sein, wenn die federnde Arme und die Zusatzarme in Umfangsrichtung betrachtet, alternierend bzw. abwechselnd vorgesehen sind, wobei in Umfangsrichtung betrachtet, zwischen zwei Zusatzarmen auch mindestens zwei federnde Arme vorgesehen sein können. Bei einer derartigen Ausgestaltung des Zusatzfedermittels können auch die Zusatzarme und ggf. der mit diesen Armen verbundene geschlossene Ringbereich eine gewisse Federeigenschaft aufweisen. Zur Abstützung der Zusatzarme können am Gehäuse befestigte Bolzen dienen, welche sich axial durch Öffnungen der Tellerfeder hindurch erstrecken. Derartige Bolzen haben besitzen Abstützbereiche z. B. in Form eines Bolzenkopfes für die Zusatzarme. Die axialen Abstützmittel für die Zusatzarme können gleichzeitig als Abstützmittel für die tellerfederartige Sensorfeder dienen.

Durch die erfindungsgemäße Anordnung von Federmitteln in einer Reibungskupplung mit Nachstelleinrichtung, welche zwischen Gehäuse und Tellerfeder wirksam ist, kann die Überwegsicherheit beim Ausrücken der Reibungskupplung vergrößert werden, und zwar weil ab dem Nachstellpunkt beziehungsweise Nachstellbereich, in dem ein vorhandener Belagverschleiß durch die Nachstelleinrichtung kompensiert wird, die die Tellerfeder gegen die Gehäuseseitige Schwenkauflage beaufschlagende Summenkraft größer wird. Diese Summenkraft wird bei den Reibungskupplungen gemäß der eingangs beschriebenen Art in den weitaus meisten Fällen durch die zwischen den Reibbelägen vorhandene Belagfederung, den zwischen Gehäuse und Anpressplatte vorhandenen blattfederartigen Mittel und wenigstens einem die Tellerfeder axial abstützenden Energiespeicher, der membranartig ausgebildet sein kann, erzeugt. Bei Freigabe der Kupplungsscheibe durch die Anpressplatte wird die Wirkung der Belagfederung auf die Anpressplatte aufgehoben. An diesem Freigabepunkt beziehungsweise innerhalb des an diesen Freigabepunkt angrenzenden Ausrückwegbereiches kann der Belagverschleiß durch Aktivierung der Nachstelleinrichtung ausgeglichen werden. Dies ist in dem eingangs angeführten Stand der Technik näher beschrieben, weshalb bezüglich der Funktion und der möglichen Ausgestaltung von in Zusammenhang mit der vorliegenden Erfindung verwendbaren Nachstelleinrichtungen ausdrücklich auf den Offenbarungsinhalt dieser Schriften Bezug genommen wird, so dass in der vorliegenden Anmeldung diesbezüglich keine ausführliche Beschreibung erforderlich ist.

Durch den Einsatz der erfindungsgemäßen, die Tellerfeder axial abstützenden Federelemente, welche zumindest über den nach Freigabe der Kupplungsscheibe durch die Anpressplatte verbleibenden Restausrückweg einen progressiven Kraftverlauf aufweisen, wird gewährleistet, dass zumindest über diesen Restausrückweg die die Tellerfeder axial abstützende, also gegen die deckelseitige Abstützauflage beaufschlagende Summenkraft größer wird, wodurch auch die auf die Tellerfederzungenspitzen einwirkende Ausrückkraft entsprechend größer werden kann, und zwar insbesondere im Endbereich des Ausrückweges, ohne dass eine unerwünschte Nachstellung, also eine Nachstellung, die nicht auf einen Verschleiß zurückzuführen ist, erfolgt.

Gemäß einer Anwendung der erfindungsgemäßen Kombination von Federelementen kann die auf die Tellerfeder einwirkende axiale Gesamtabstützkraft, welche die Tellerfeder sowohl gegen eine deckelseitige Abstützauflage bzw. Schwenklagerung beaufschlagt als auch beim Ausrücken der Reibungskupplung axial abstützt, damit diese im Durchmesserbereich der Abstützauflage verschwenkt werden kann, über den Verstellweg der Reibungskupplung infolge von Verschleiß einen praktisch konstanten oder leicht ansteigenden Kraftverlauf aufweisen. Dieser Kraftverlauf kann mittels eines Zusatzfedermittels erzeugt werden, welches über den Ausrückweg der Tellerfeder und den axialen Verlagerungsweg der Tellerfeder für den Verschleißausgleich einen progressiven, also ansteigenden Kraftverlauf besitzt. Die zusätzlichen blattfederartigen Mittel können zwischen Gehäuse und Anpressplatte derart verbaut sein, dass sie über den Ausrückweg der Reibungskupplung, das bedeutet also auch über die Verlagerung der Anpressplatte in Ausrückrichtung, einen degressiven, also abnehmenden Kraftverlauf besitzen. Die Federcharakteristiken der blattfederartigen Mittels und des parallel zu diesen wirksamen Zusatzfedermittels, können dabei derart aufeinander abgestimmt sein, dass der von diesen erzeugte resultierende Kraftverlauf, welcher auf die Tellerfeder einwirkt, über den möglichen Ausrückweg der Anpressplatte gegenüber dem Gehäuse praktisch konstant bleibt. Eine derartige Abstimmung ist vorteilhaft bei Verwendung einer Sensorfeder, die den Hauptanteil der für die schwenkbare Halterung der Tellerfeder am Gehäuse erforderlichen Kraft aufbringt.

Für die Nachstellfunktion der zwischen Tellerfeder und Kupplungsgehäuse vorgesehenen Nachstelleinrichtung kann es besonders zweckmäßig sein, wenn bei Belagverschleiß der zum Ausrücken der Reibungskupplung erforderliche Kraftverlauf größer wird, wodurch gewährleistet werden kann, dass zumindest über einen geringen Bereich des Ausrückkraftverlaufes eine Kraft erzeugt wird, welche eine geringe axiale Verlagerung der axial federbelasteten Abstützauflage bewirkt. Diese geringe axiale Verlagerung ermöglicht es der Nachstelleinrichtung, den aufgetretenen Verschleiß auszugleichen. Die Tellerfeder kann in vorteilhafter Weise einen Kennlinienverlauf aufweisen, der gewährleistet, dass während der Verlagerung der federbelasteten Abstützauflage die zum Verschwenken der Tellerfeder erforderliche Kraft abnimmt. Durch eine derartige Auslegung der Tellerfeder kann gewährleistet werden, dass bei Vorhandensein von Belagverschleiß sich stets wieder ein Gleichgewicht zwischen den beidseits axial auf die Tellerfeder einwirkenden Kräften einstellen kann. In vorteilhafter Weise kann die Tellerfeder zumindest über einen Teil des Ausrückwegbereiches, insbesondere in dem Abschnitt, innerhalb dessen die Nachstellung erfolgt, eine abfallende Kraft-Weg-Kennlinie aufweisen.

Weitere Merkmale beziehungsweise zweckmäßige Weiterbildungen sowie Vorteile der Erfindung ergeben sich aus der nachfolgenden Figurenbeschreibung.

Anhand der Figuren sei die Erfindung näher erläutert. Dabei zeigt:
- Figur 1: eine Reibungskupplung im Halbschnitt,
- Figur 2: Ansicht der Reibungskupplung, jedoch ohne Anpressplatte,
- Figur 3: ein in vergrößertem Maßstab dargestelltes Zusatzfedermittel für eine Reibungskupplung gemäß den Figuren 1 und 2,
- Figur 4: einen Schnitt durch eine weitere Ausbildung einer Reibungskupplung,
- Figur 5: eine Ansicht der Reibungskupplung gemäß Figur 4, jedoch ohne Anpressplatte,
- Figur 6: ein in vergrößertem Maßstab dargestelltes Zusatzfedermittel für eine Reibungskupplung gemäß den Figuren 4 und 5,
- Figur 7: eine zusammenhängende Ausgestaltung eines Zusatzfedermittels und einer tellerfederartigen Sensorfeder, welche beispielsweise bei einer Reibungskupplungsausgestaltung gemäß den Figuren 1 und 2 eingesetzt werden kann und
- Figur 8 bis 11: eine Reibungskupplung im Schnitt und Diagramme mit Funktionskennlinien verschiedener Federmittel für eine solche Reibungskupplung.

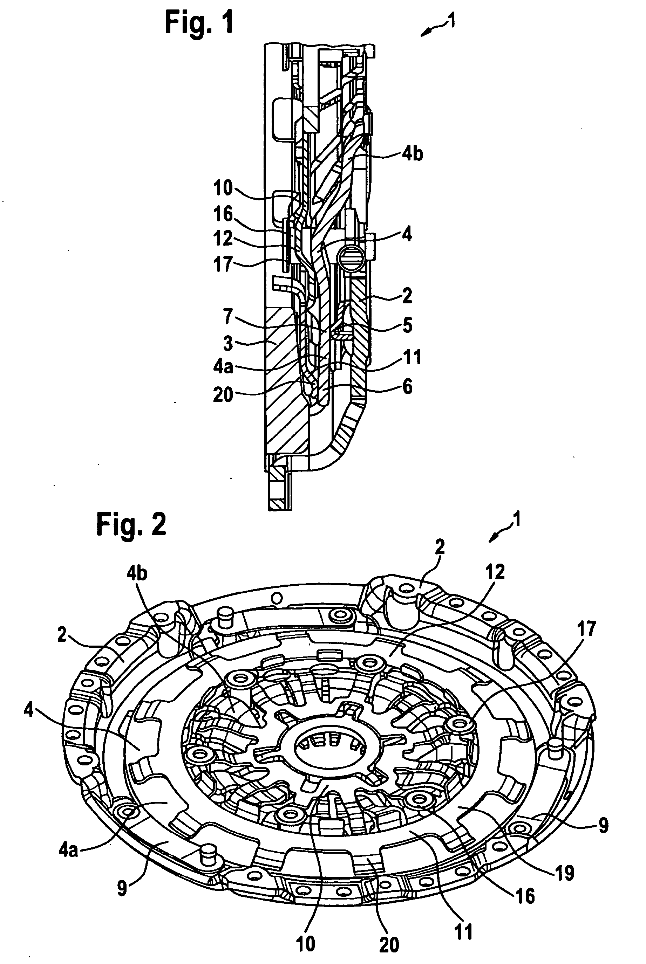

Die in den Figuren 1 und 2 dargestellte Reibungskupplung 1 besitzt ein Gehäuse 2 und eine mit diesem drehfest verbundene, jedoch axial begrenzt verlagerbare Anpressplatte 3. Axial zwischen der Anpressplatte 3 und dem Gehäuse 2 ist eine Anpresstellerfeder 4 verspannt, die um eine vom Gehäuse 2 getragene ringartige, als Abstützauflage 5 dienende Schwenklagerung verschwenkbar ist und die Anpressplatte 3 in Richtung einer mit dem Gehäuse 2 fest verbundenen Gegendruckplatte, wie zum Beispiel einem Schwungrad, beaufschlagt, wodurch die Reibbeläge der Kupplungsscheibe zwischen den Reibflächen der Anpressplatte 3 und der Gegendruckplatte einspannbar sind.

Die Anpressplatte 3 ist mit dem Gehäuse 2 über in Umfangsrichtung beziehungsweise tangential gerichteten Blattfedern 9 drehfest verbunden. Die mit der Kupplung 1 zusammenwirkende Kupplungsscheibe besitzt vorzugsweise so genannte Belagfedersegmente, die einen progressiven Drehmomentaufbau beim Einrücken der Reibungskupplung gewährleisten, indem sie über eine begrenzte axiale Verlagerung der beiden Reibbeläge der Kupplungsscheibe in Richtung aufeinander zu einen progressiven Anstieg der auf die Reibbeläge einwirkenden Axialkräfte ermöglichen.

Bei dem dargestellten Ausführungsbeispiel besitzt die Tellerfeder 4 einen die Anpresskraft aufbringenden ringförmigen Grundkörper 4 a, von dem radial nach innen hin verlaufenden Betätigungszungen 4 b ausgehen. Die Tellerfeder 4 ist dabei derart eingebaut, dass sie mit radial weiter außen liegenden Bereichen 6 die Anpressplatte 3 beaufschlagt, und mit radial weiter innen liegenden Bereichen 7 um die Abstützauflage 5 kippbar ist.

Zusätzlich zu den blattfederartigen Federmitteln 9 sind weitere Federmittel 10 und 11 zwischen dem Gehäuse 2 und der Anpressplatte 3 wirksam. Das weitere Federmittel 10 ist hier spinnenartig ausgebildet und zwischen dem Gehäuse 2 und der Tellerfeder 4 derart verspannt, dass es auf die Tellerfeder 4 eine axiale Kraft ausübt, welche die Tellerfeder 4 in Richtung des Gehäuses 2 und somit auch gegen die Abstützauflage 5 drängt. Hierfür ist das Zusatzfedermittel 10 am Gehäuse 2 axial abgestützt und beaufschlagt mit zungenförmigen Bereichen 12 die Tellerfeder 4.

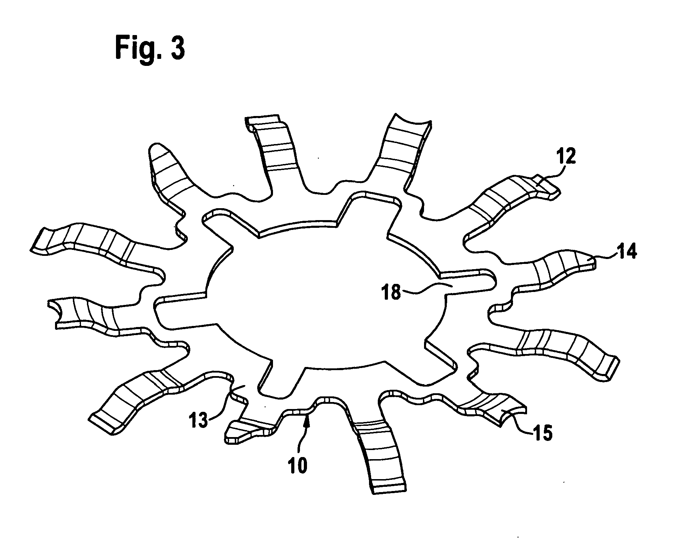

Wie aus Figur 3 ersichtlich ist, besitzt das spinnenartig ausgebildete weitere Federmittel 10 einen in Umfangsrichtung geschlossenen, beispielsweise ringartig ausgebildeten Bereich 13, von dem aus sich die zungenförmigen Bereiche 12 radial nach außen erstrecken. In Umfangsrichtung betrachtet sind zwischen den zungenförmigen Bereichen 12 Abstützarme 14, 15 vorgesehen. Im in die Reibungskupplung 1 montierten Zustand des weiteren Federmittels 10, stützen sich die Arme 14, 15 an vom Gehäuse getragenen Abstützbereichen, welche bei einer Ausgestaltung einer Reibungskupplung gemäß Figur 2 durch Abstandsbolzen 16 gebildet sind, ab. Die Abstandsbolzen 16 sind mit dem Gehäuse 2 vernietet und erstrecken sich axial durch die Tellerfeder 4 hindurch. Hierfür besitzt die Tellerfeder 4 entsprechende Ausschnitte. Die Abstandsbolzen 16 haben eine kopfförmige Anformung bzw. Verbreiterung 17 an denen sich die Arme 14, 15 axial abstützen. Bei der Montage des weiteren Federmittels 10 wird dieses federnd verspannt, um die erforderliche Abstützkraft für die Tellerfeder 4 aufzubringen. In vorteilhafter Weise können sowohl die zungenförmigen Bereiche 12 als auch die Arme 14, 15 federelastische Eigenschaften aufweisen. Auch der geschlossene Bereich 13, kann zur Erzeugung der gewünschten Federcharakteristik herangezogen werden. Wie aus Figur 3 ersichtlich ist, sind bei dem dargestellten Ausführungsbeispiel eines weiteren Federmittels 10 radial innerhalb der Arme 14, 15 radial nach außen gerichtete Ausschnitte 18 vorgesehen, wodurch der geschlossene Bereich 13 in Umfangsrichtung einen mäanderförmigen Verlauf aufweist.

Zur Montage des weiteren Federmittels 10, können zunächst lediglich drei Abstandsbolzen 16 mit dem Gehäuse 2 vernietet werden, so dass durch axiales Einlegen in das Gehäuse 2 und Verdrehen des weiteren, axial vorgespannten Federmittels 10 zunächst die Arme 14 an den Abstützbereichen 17 der Abstandsbolzen 16 zur Anlage kommen. Es erfolgt also praktisch eine bajonettartige Verbindung zwischen dem Gehäuse 2 und dem weiteren Federmittel 10.

Darauf folgend können dann weitere drei Abstandsbolzen 16 mit dem Gehäuse 2 vernietet werden an denen sich die Arme 15 mit Vorspannung abstützen können. Über die Arme 15 wird gleichzeitig die Verdrehsicherung zwischen dem Gehäuse 2 und dem weiteren Federmittel 10 gewährleistet. Hierfür sind die Endbereiche der Arme 15 an den Durchmesser der Abstandsbolzen 16 entsprechend angepasst.

Wie aus den Figuren 1 und 2 erkennbar ist, besitzt die Reibungskupplung 1 weiterhin ein zusätzliches Federmittel 11, das im Folgenden als tellerfederartige Sensorfeder 11 bezeichnet wird. Die tellerfederartige Sensorfeder 11 besitzt einen ringartigen Grundkörper 19, von dem radial nach außen hin erstreckende Zungen 20 ausgehen. Die Zungen 20 stützen sich mit axialer Vorspannung an den weiter außen liegenden Bereichen 6 der Tellerfeder 4 ab. Diese axiale Vorspannung wird durch die verspannte Einbaulage der tellerfederartigen Sensorfeder 11 gewährleistet. Die verspannte Einbaulage wird durch Abstützung der tellerfederartigen Sensorfeder 11 an den Abstandsbolzen 16 erzielt. Hierfür kann die tellerfederartige Sensorfeder 11 radial innen entsprechende Arme bzw. Ausleger besitzen, die beispielsweise mit den Abstützköpfen 17 der Abstandsbolzen 16 zusammenwirken. Die tellerfederartige Sensorfeder 11 kann in ähnlicher Weise wie dies im Zusammenhang mit dem weiteren Federmittel 10 beschrieben wurde, mittels einer bajonettartigen Montage mit dem Gehäuse 2 zusammen gebaut werden.

Vor der Montage bzw. Teilmontage des weiteren Federmittels 10 und der tellerfederartigen Sensorfeder 11, muss - wie dies an sich aus den Figuren 1 und 2 erkennbar ist - zunächst die Tellerfeder 4 in das Gehäuse 2 eingelegt werden.

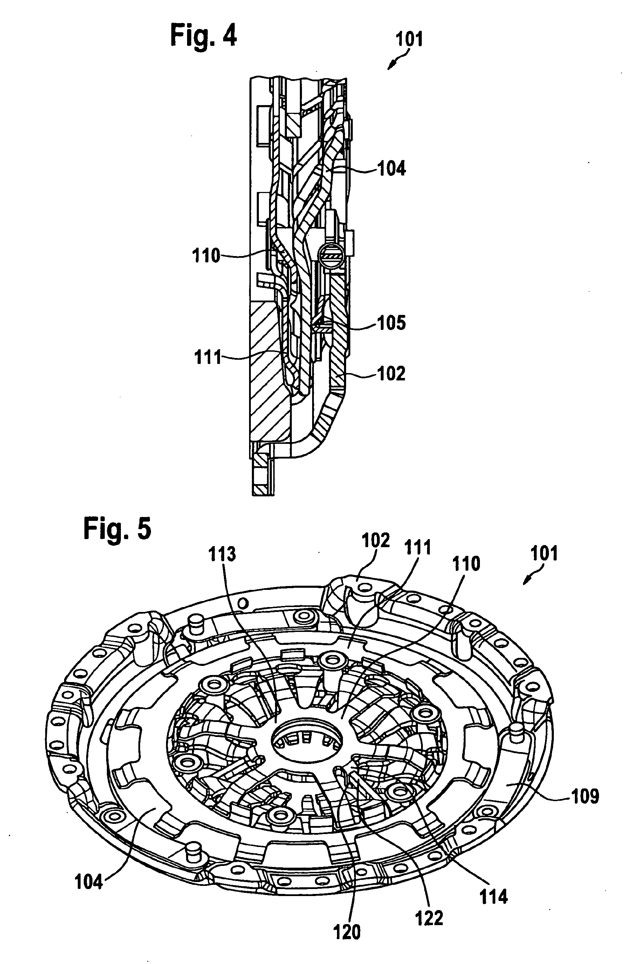

Die in den Figuren 4 und 5 dargestellte Reibungskupplung 101 besitzt im Wesentlichen den gleichen Aufbau wie die Reibungskupplung 1 gemäß den Figuren 1 und 2. Die Tellerfeder 104 ist ebenfalls in einem Gehäuse 102 gegenüber einer Abstützauflage 105 verschwenkbar gelagert. Die axiale Abstützung der Tellerfeder 104 erfolgt wiederum mittels Blattfedern 109, einem weiteren Federmittel 110 und einer tellerfederartigen Sensorfeder 111. Der wesentliche Unterschied der Kupplungsausgestaltung gemäß den Figuren 4 und 5 gegenüber einer Ausgestaltung gemäß Figur 1 und 2 besteht in der Ausbildung des weiteren Federmittels 110 und dessen Abstützung am Gehäuse 102.

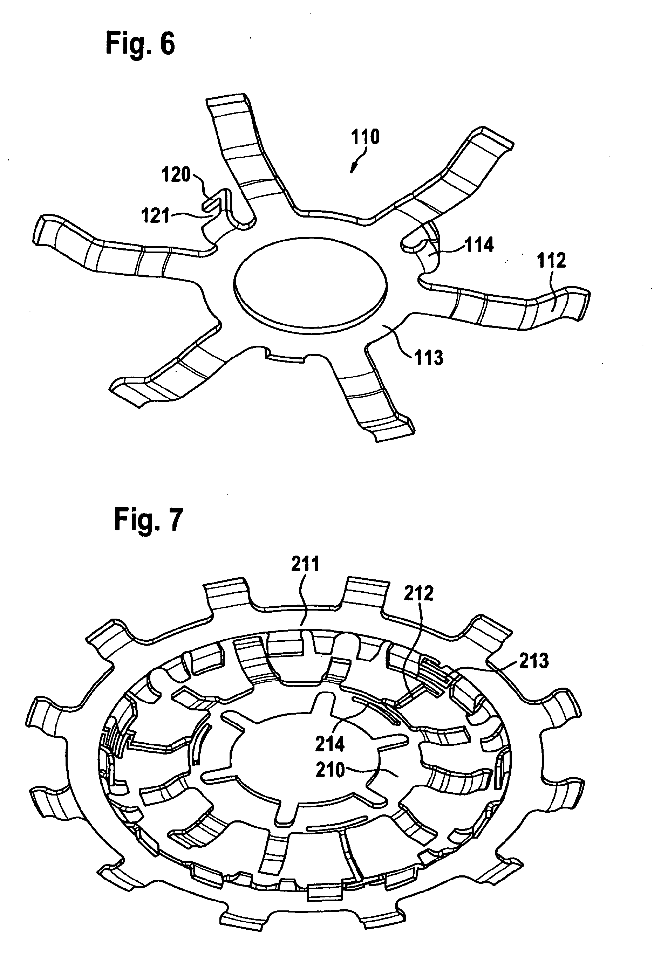

Aus Figur 6 ist erkennbar, dass das weitere Federmittel 110 einen ringförmigen Grundkörper 113 aufweist, von dem radial nach außen gerichtete zungenförmige Bereiche bzw. Arme 112 ausgehen. Diese zungenförmige Bereiche 112 stützen in ähnlicher Weise wie die zungenförmigen Bereiche 12 die Tellerfeder 104 der Reibungskupplung 101 ab.

Aus Figur 6 ist weiterhin erkennbar, dass am radial äußeren Bereich des ringförmigen Grundkörpers 113 axial gerichtete Zungen 114 angeformt sind. Die Zungen 114 sind dabei in Umfangsrichtung zwischen zungenförmigen Bereichen 112 angeordnet. Bei dem dargestellten Ausführungsbeispiel sind drei derartige Zungen 114 vorgesehen. Die Zungen 114 dienen zur Abstützung des weiteren Federmittels 110 an dem Gehäuse 102.

Die Verbindung zwischen dem weiteren Federmittel 110 und dem Gehäuse 102 erfolgt mittels einer Steck-/Drehverbindung, also einer bajonettartigen Verbindung.

Zur Bildung der Steck-/Drehverbindung bilden die Zungen 114 Einhängbereiche 120, die hier durch Einbringung eines umfangsmäßigen Ausschnitts 121 in die Zungen 114 gebildet sind. Die Einhängbereiche 120 wirken mit Abstützbereichen 122 des Gehäuses 2 zusammen, wie dies aus Figur 5 erkennbar ist. Die Abstützbereiche 122 sind vorzugsweise einstückig mit dem Gehäuse 102 ausgebildet. Diese Abstützbereiche 122 können beispielsweise durch einteilig mit dem Gehäuse 102 ausgebildete Stege 122 gebildet sein. Die einzelnen Stege 122 können radial innen über ringförmigen geschlossenen Bereich miteinander verbunden sein. Der ringförmige, geschlossene Bereich kann axial angrenzend an den ringförmigen Grundkörper 113 angeordnet sein. Die Abstützbereiche 122 können in ähnlicher Weise hergestellt und ausgebildet sein wie dies im Zusammenhang mit der Figur 12 der DE 43 45 215 B4 beschrieben ist.

In Figur 7 ist eine zusammenhängende Ausgestaltung einer tellerfederartigen Sensorfeder 211 und eines Zusatzfedermittels 210 dargestellt. Durch eine derartige zusammenhängende Herstellung der beiden Federelemente 210 und 211 kann die Montage der entsprechenden Reibungskupplung wesentlich vereinfacht werden.

Aus Figur 7 ist ersichtlich, dass die tellerfederartige Sensorfeder 211 und das weitere Federmittel bzw. das Zusatzfedermittel 210 über in axialer Richtung weichelastische Verbindungsabschnitte 212 verbunden sind. Um die Weichheit der Verbindungsabschnitte 212 zu gewährleisten, besitzen diese in radialer Richtung mäanderförmig verlaufende Bereiche 213 sowie Torsionsbereiche 214, mittels derer sie mit dem entsprechenden Federelement 210 und/oder 211 verbunden sind.

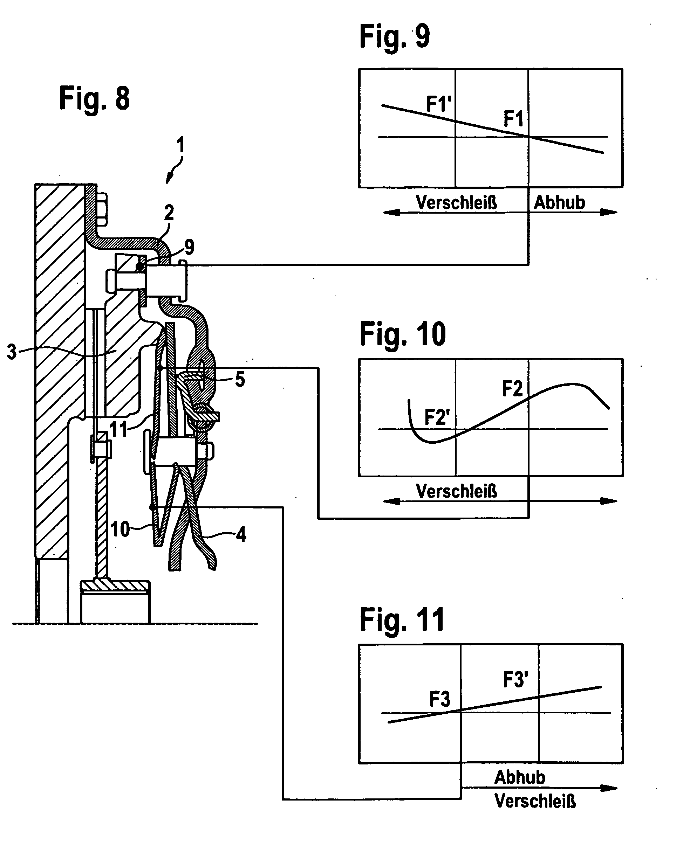

Wie im Zusammenhang mit der in Figur 8 schematisch dargestellten Reibungskupplung 1 und den drei dieser Figur 8 zugeordneten Diagramme gemäß den Figuren 9, 10 und 11 erkennbar ist, ist das weitere Federmittel 10 derart ausgestaltet und verspannt eingebaut, dass es sowohl die Tellerfeder 4 beim Ausrücken der Reibungskupplung 1 axial entsprechend dem Ausrückweg in Richtung des Gehäuses 2 beaufschlagt, also auch zumindest über den Abhubweg der Anpressplatte 3 einen progressiven Kraftverlauf aufweist. Letzteres bedeutet, dass - über den Abhubweg der Anpressplatte 3 betrachtet bzw. den Verschwenkwinkel der Tellerfeder 4 um die Abstützauflage 5 betrachtet - die von den weiteren Federmittel 10 auf die Tellerfeder 4 ausgeübte Axialkraft zumindest über einen Teilbereich vorzugsweise über den gesamten Abhubweg der Anpressplatte 3 bzw. dem Verschwenkwinkel der Tellerfeder 4 größer wird.

Wie aus dem Diagramm gemäß Figur 9 erkennbar ist, sind die Blattfedern 9 ebenfalls mit axialer Verspannung zwischen dem Gehäuse 2 und der Anpressplatte 3 verbaut. Die Verspannung der Blattfedern 9 ist dabei derart vorgenommen, dass - über den Abhubweg der Anpressplatte 3 betrachtet - die von den Blattfedern 9 auf die Anpressplatte 3 und somit auch auf die Tellerfeder 4 ausgeübte Axialkraft in Abhubrichtung der Anpressplatte 3 degressiv ist, also kleiner wird. Mit zunehmendem Reibbelagverschleiß nimmt jedoch die Verspannung der Blattfedern 9 zu, so dass auch die von diesen ausgeübte Axialkraft größer wird. Die von dem weiteren Federmittel 10 auf die Tellerfeder 4 erzeugte Axialkraft nimmt ebenfalls mit zunehmendem Reibbelagverschleiß der Kupplungsscheibe zu, wie dies aus dem Diagramm gemäß Figur 11 erkennbar ist.

Figur 10 zeigt eine mögliche Kraft-Weg-Kennlinie für eine tellerfederartige Sensorfeder 11. Aus dem Diagramm gemäß Figur 10 ist erkennbar, dass mit zunehmendem Kupplungsscheibenreibbelagverschleiß die von tellerfederartigen Sensorfeder 11 auf die Tellerfeder 4 ausgeübte Axialkraft kleiner wird also degressiv ist.

Die Kraft-Weg-Kennlinien der Federelemente 9, 10 und 11 sind derart aufeinander abgestimmt, dass die über den Kupplungsscheibenreibbelagverschleiß auftretende Verringerung der von der tellerfederartigen Sensorfeder 11 ausgeübten Axialkraft, zumindest teilweise, kompensiert wird durch die dabei stattfindende Zunahme der von den Blattfedern 9 und von dem weiteren Federmittel 10 ausgeübten Axialkräfte , welche ebenfalls auf die Tellerfeder 4 einwirken.

### Bezugszeichenliste

| | |
|---|---|
| 1 | Reibungskupplung |
| 2 | Gehäuse |
| 3 | Anpressplatte |
| 4 | Anpresstellerfeder |
| 4a | ringförmiger Grundkörper |
| 4b | Betätigungszungen |
| 5 | Abstützauflage |
| 6 | außen liegender Bereich |
| 7 | innen liegender Bereich |
| 9 | Blattfedern |
| 10 + 11 | Zusatzfedermittel |
| 12 | zungenförmige Bereiche |
| 13 | Bereiche |
| 14 + 15 | Abstützarme |
| 16 | Abstandsbolzen |
| 17 | Abstützbereiche |
| 18 | Ausschnitte |
| 19 | Grundkörper |
| 20 | Zungen |
| 101 | Reibungskupplung |
| 102 | Gehäuse |
| 104 | Tellerfeder |
| 105 | Abstützauflage |
| 109 | Blattfedern |
| 110 | Federmittel |
| 111 | Sensorfeder |
| 112 | zungenförmige Bereiche |
| 113 | ringförmiger Grundkörper |
| 114 | Zungen |
| 120 | Einhängebereiche |
| 121 | umfangmäßiger Ausschnitt |
| 122 | Abstützbereiche |
| 210 | Zusatzfedermittel |
| 211 | Sensorfeder |
| 212 | Verbindungsabschnitt |
| 213 | mäanderförmig verlaufende Bereiche |
| 214 | Torsionsbereiche |

## Patentansprüche

1. Reibungskupplung (1) zur Verwendung in einem Antriebsstrang mit einer gegenüber einem Gehäuse (2) drehfesten, jedoch axial begrenzt verlagerbaren Anpressplatte (3), wobei zwischen Gehäuse (2) und Anpressplatte (3) wenigstens eine Tellerfeder (4) vorgesehen ist, welche die Anpressplatte (3) in axialer Richtung beaufschlagt, die Reibungskupplung (1) weiterhin eine zwischen dem Gehäuse (2) und der Tellerfeder (4) wirksame Nachstelleinrichtung aufweist, die einen zumindest teilweisen Ausgleich wenigstens des Reibbelagverschleißes einer mit der Anpressplatte (3) bei im Antriebsstrang montierter Reibungskupplung (1) zusammenwirkenden Kupplungsscheibe gewährleistet, wobei die Tellerfeder (4) gegenüber einer vom Gehäuse (2) getragenen ringartigen Abstützauflage (5) verschwenkbar ist und über Federmittel (9, 10, 11) axial in Richtung dieser Abstützauflage (5) kraftbeaufschlagt ist, wobei die die axiale Kraftbeaufschlagung der Tellerfeder (4) bewirkenden Federmittel (9, 10, 11) zumindest folgende Mittel umfassen, nämlich
- blattfederartige Mittel (9), welche einerseits mit dem Gehäuse (2) und andererseits mit der Anpressplatte (3) verbunden sind und zumindest im montierten Zustand der Reibungskupplung (1) eine Vorspannung aufweisen, welche die Anpressplatte (3) axial in Richtung der Tellerfeder (4) beaufschlagt, wobei mit zunehmendem Reibbelagverschleiß die von den blattfederartigen Mitteln (9) auf die Anpressplatte (3) ausgeübte Axialkraft tendenzmäßig zunimmt,
- eine tellerfederartige Sensorfeder (11), welche wirkungsmäßig zwischen Gehäuse (2) und Tellerfeder (4) elastisch verspannt ist und die Tellerfeder (4) axial in Richtung der Abstützauflage (5) beaufschlagt,
- wenigstens ein Zusatzfedermittel (10), das wirkungsmäßig zwischen Gehäuse (2) und Tellerfeder (4) elastisch verspannt ist und die Tellerfeder (4) axial in Richtung der Abstützauflage (5) kraftbeaufschlagt,
**dadurch gekennzeichnet, dass** das Zusatzfedermittel (10) beim Verschwenken der Tellerfeder (4) zum Ausrücken der Reibungskupplung (1) und mit zunehmendem Reibbelagverschleiß tendenzmäßig einen ansteigenden Kraftverlauf besitzt, die Einleitung der von der tellerfederartigen Sensorfeder (11) auf die Tellerfeder (4) ausgeübten Axialkraft radial außerhalb der Abstützauflage (5) und die Einleitung der von dem Zusatzfedermittel (10) auf die Tellerfeder (4) ausgeübten Axialkraft radial innerhalb der Abstützauflage (5) erfolgen.

2. Reibungskupplung (1) nach Anspruch 1, **dadurch gekennzeichnet, dass** über die Lebensdauer der Reibungskupplung (1) wenigstens die Anpressplatte (3) und die Tellerfeder (4) eine axiale Verlagerung gegenüber dem Gehäuse (2) zumindest aufgrund des Reibbelagverschleißes erfahren, wodurch sich der Verspannungszustand der blattfederartigen Mittel (9), der Sensorfeder (11) und der Zusatzfedermittel (10) verändert.

3. Reibungskupplung nach Anspruch 1 oder 2, **dadurch gekennzeichnet, dass** mittels der Nachstelleinrichtung die Abstützauflage (5) der Tellerfeder (4) in Abhängigkeit des auftretenden Reibbelagverschleißes axial verlagert wird.

4. Reibungskupplung nach einem der Ansprüche 1 bis 3, **dadurch gekennzeichnet, dass** das Zusatzfedermittel (10) einen ringförmigen Bereich besitzt, von dem radial nach außen gerichtete federnde Arme (12, 14, 15) ausgehen, welche die Tellerfeder (4) axial beaufschlagen und der ringförmige Bereich mittelbar oder unmittelbar am Gehäuse (2) axial abgestützt ist.

5. Reibungskupplung nach Anspruch 4, **dadurch gekennzeichnet, dass** vom ringförmigen Bereich Zusatzarme (14, 15) ausgehen, die zur Abstützung des Zusatzfedernmittels (10) am Gehäuse (2) dienen.

6. Reibungskupplung nach Anspruch 5, **dadurch gekennzeichnet, dass** die Zusatzarme (14) über eine Bajonettverriegelung mit dem Gehäuse (2) verbunden sind.

7. Reibungskupplung nach Anspruch 5, **dadurch gekennzeichnet, dass** die Zusatzarme (114) mittels am Gehäuse (2) vorgesehenen Abstützbereichen (122) axial abgestützt sind.

## Claims

1. Friction clutch (1) for use in a drivetrain, having a pressure plate (3) which is rotationally fixed but axially displaceable to a limited extent with respect to a housing (2), wherein at least one plate spring (4) is provided between the housing (2) and the pressure plate (3), which plate spring loads the pressure plate (3) in the axial direction, the friction clutch (1) also having a readjustment device which acts between the housing (2) and the plate spring (4) and which ensures an at least partial compensation of at least the friction pad wear of a clutch disc which interacts with the pressure plate (3) when the friction clutch (1) is mounted in the drivetrain, wherein the plate spring (4) is pivotable relative to an annular supporting abutment (5) borne by the housing (2) and is loaded with force axially in the direction of said supporting abutment (5) by spring means (9, 10, 11), wherein the spring means (9, 10, 11) which exert the axial force loading on the plate spring (4) comprise at least the following means:
- leaf-spring-like means (9) which are connected at one side to the housing (2) and at the other side to the pressure plate (3) and which, at least in the mounted state of the friction clutch (1), have a preload which loads the pressure plate (3) axially in the direction of the plate spring (4), wherein, with progressive friction pad wear, the axial force exerted by the leaf-spring-like means (9) on the pressure plate (3) tendentially increases,
- a plate-spring-like sensor spring (11) which is functionally elastically braced between the housing (2) and the plate spring (4) and loads the plate spring (4) axially in the direction of the supporting abutment (5),
- at least one auxiliary spring means (10) which is functionally elastically braced between the housing (2) and the plate spring (4) and loads the plate spring (4) with force axially in the direction of the supporting abutment (5),
**characterized in that** the auxiliary spring means (10) tendentially has a rising force profile during the pivoting of the plate spring (4) for the disengagement of the friction clutch (1) and with progressive friction pad wear, the introduction of the axial force exerted by the plate-spring-like sensor spring (11) on the plate spring (4) takes place radially outside the supporting abutment (5), and the introduction of the axial force exerted by the auxiliary spring means (10) on the plate spring (4) takes place radially within the supporting abutment (5).

2. Friction clutch (1) according to claim 1, **characterized in that**, over the service life of the friction clutch (1), at least the pressure plate (3) and the plate spring (4) experience an axial displacement relative to the housing (2) at least owing to the friction pad wear, whereby the state of bracing of the leaf-spring-like means (9), of the sensor spring (11) and of the auxiliary spring means (10) varies.

3. Friction clutch according to claim 1 or 2, **characterized in that**, by means of the readjustment device, the supporting abutment (5) of the plate spring (4) is displaced axially as a function of the occurring friction pad wear.

4. Friction clutch according to one of Claims 1 to 3, **characterized in that** the auxiliary spring means (10) has an annular region from which radially outwardly directed resilient arms (12, 14, 15) extend, which arms load the plate spring (4) axially, and the annular region is axially supported indirectly or directly on the housing (2).

5. Friction clutch according to Claim 4, **characterized in that** auxiliary arms (14, 15) which serve for supporting the auxiliary spring means (10) on the housing (2) extend from the annular region.

6. Friction clutch according to Claim 5, **characterized in that** the auxiliary arms (14) are connected to the housing (2) by means of a bayonet lock.

7. Friction clutch according to Claim 5, **characterized in that** the auxiliary arms (114) are supported axially by means of support regions (122) provided on the housing (2).

## Revendications

1. Embrayage à friction (1) destiné à l'utilisation dans une chaîne cinématique comprenant un plateau de pression (3) fixé en rotation par rapport à un carter (2) mais déplaçable axialement de manière limitée, au moins un ressort Belleville (4) étant prévu entre le carter (2) et le plateau de pression (3), lequel ressort Belleville sollicite le plateau de pression (3) dans la direction axiale, l'embrayage à friction (1) présentant en outre un dispositif de rattrapage agissant entre le carter (2) et le ressort Belleville (4), lequel dispositif de rattrapage garantit une compensation au moins partielle au moins de l'usure des garnitures de friction d'un disque d'embrayage coopérant avec le plateau de pression (3) lorsque l'embrayage à friction (1) est monté dans la chaîne cinématique, le ressort Belleville (4) pouvant pivoter par rapport à un appui de support (5) de type bague porté par le carter (2) et étant sollicité par une force par le biais de moyens de ressort (9, 10, 11) axialement dans la direction de cet appui de support (5), les moyens de ressort (9, 10, 11) provoquant la sollicitation par une force axiale du ressort Belleville (4) comprenant au moins les moyens suivants, à savoir
- des moyens de type ressort à lame (9), qui sont connectés d'une part au carter (2) et d'autre part au plateau de pression (3) et qui présentent au moins dans l'état monté de l'embrayage à friction (1) une précontrainte qui sollicite le plateau de pression (3) axialement dans la direction du ressort Belleville (4), la force axiale exercée par les moyens de type ressort à lame (9) sur le plateau de pression (3) augmentant de manière tendancielle avec l'augmentation de l'usure des garnitures de friction,
- un ressort de capteur (11) de type ressort Belleville, qui est précontraint élastiquement de manière fonctionnelle entre le carter (2) et le ressort Belleville (4) et qui sollicite le ressort Belleville (4) axialement dans la direction de l'appui de support (5),
- au moins un moyen de ressort supplémentaire (10) qui est précontraint élastiquement de manière fonctionnelle entre le carter (2) et le ressort Belleville (4) et qui sollicite par une force le ressort Belleville (4) axialement dans la direction de l'appui de support (5),
**caractérisé en ce que** le moyen de ressort supplémentaire (10) lors du pivotement du ressort Belleville (4) pour le débrayage de l'embrayage à friction (1) et dans le cas d'une usure des garnitures de friction croissante de manière tendancielle, possède un développement de force croissant, l'introduction de la force axiale exercée par le ressort de capteur (11) de type ressort Belleville sur le ressort Belleville (4) s'effectue radialement à l'extérieur de l'appui de support (5) et l'introduction de la force axiale exercée par le moyen de ressort supplémentaire (10) sur le ressort Belleville (4) s'effectue radialement à l'intérieur de l'appui de support (5).

2. Embrayage à friction (1) selon la revendication 1, **caractérisé en ce qu'**au moins le plateau de pression (3) et le ressort Belleville (4) subissent, sur toute la durée de vie de l'embrayage à friction (1), un décalage axial par rapport au carter (2) au moins à cause de l'usure des garnitures de friction, de sorte que l'état de précontrainte des moyens de type ressort à lame (9), du ressort de capteur (11) et des moyens de ressort supplémentaires (10) varie.

3. Embrayage à friction selon la revendication 1 ou 2, **caractérisé en ce que** l'appui de support (5) du ressort Belleville (4) est décalé axialement au moyen du dispositif de rattrapage en fonction de l'usure des garnitures de friction qui se produit.

4. Embrayage à friction selon l'une quelconque des revendications 1 à 3, **caractérisé en ce que** le moyen de ressort supplémentaire (10) possède une région annulaire de laquelle partent des bras élastiques orientés radialement vers l'extérieur (12, 14, 15), qui sollicitent axialement le ressort Belleville (4) et la région annulaire est supportée axialement directement ou indirectement sur le carter (2).

5. Embrayage à friction selon la revendication 4, **caractérisé en ce que** des bras supplémentaires (14, 15) partent de la région annulaire, lesquels servent à supporter le moyen de ressort supplémentaire (10) sur le carter (2).

6. Embrayage à friction selon la revendication 5, **caractérisé en ce que** les bras supplémentaires (14) sont connectés au carter (2) par le biais d'un verrouillage à baïonnette.

7. Embrayage à friction selon la revendication 5, **caractérisé en ce que** les bras supplémentaires (114) sont supportés axialement au moyen de régions de support (122) prévues sur le carter (2).
